# FASCICULE DE BREVET EUROPEEN

(11) **EP 3 520 357 B1**
(45) Date de publication et mention de la délivrance du brevet: **03.02.2021**
(21) Numéro de dépôt: 17784340.6
(22) Date de dépôt: 12.09.2017
(51) Int. Cl.: H04L 29/06, B60R 25/20

(54) **PROCEDE DE MISE A JOUR D'UN CODE DE DEMARRAGE A DISTANCE D'UN VEHICULE AUTOMOBILE**
VERFAHREN ZUR AKTUALISIERUNG EINES CODES ZUR FERNBEDIENUNG EINES KRAFTFAHRZEUGS
METHOD FOR UPDATING A CODE FOR REMOTE START OF A MOTOR VEHICLE

(30) Priorité: 28.09.2016 FR 1659247
(43) Date de publication de la demande: 07.08.2019
(73) Titulaire: Renault SAS, 92100 Boulogne Billancourt (FR)
(72) Inventeur: MOHAND, Kaci, 94320 Thiais (FR); MONTHEL, Nicolas, 78000 Versailles (FR)
(86) Numéro de dépôt international: PCT/FR2017/052418
(87) Numéro de publication internationale: WO 2018/060561

(56) Documents cités:
- WO-A1-2016/135418
- US-A1- 2007 200 671
- US-A1- 2015 221 150

## Description

### DOMAINE TECHNIQUE AUQUEL SE RAPPORTE L'INVENTION

La présente invention concerne de manière générale l'industrie automobile.

Elle concerne plus particulièrement un procédé de mise à jour d'un code confidentiel enregistré dans la mémoire d'un calculateur embarqué dans un véhicule automobile, lequel code confidentiel est prévu pour permettre une commande à distance sécurisée telle qu'un démarrage à distance de ce véhicule automobile.

### ARRIERE-PLAN TECHNOLOGIQUE

Il arrive, par temps chaud comme par temps froid, que le conducteur d'un véhicule automobile souhaite démarrer le moteur de ce véhicule à distance, c'est-à-dire avant même d'avoir embarqué dans le véhicule.

Par temps froid, ce démarrage anticipé permet de dégivrer les parebrises avant et arrière, et de commencer à réchauffer l'habitacle du véhicule.

Par temps chaud, ce démarrage anticipé permet de refroidir l'habitacle du véhicule à l'aide de la climatisation.

On connaît actuellement différentes méthodes permettant de démarrer un véhicule à distance. Il est en effet actuellement possible d'utiliser une clé électronique adaptée à communiquer avec le véhicule, ou un appareil portable électronique (tablette ou téléphone mobile) programmé à cet effet.

La demande de brevet américain US 2007/0200671 A1 décrit un système de commande à distance d'un véhicule à partir d'un terminal mobile.

La demande de brevet américain US 2015/0221150 A1 décrit un système dans lequel un utilisateur peut obtenir un code PIN pour accéder à certaines fonctions du véhicule. Le code PIN est généré par un processeur externe ou interne au véhicule et transmis à un terminal mobile de l'utilisateur.

La demande de brevet international WO 2016/135418 A1 décrit un système dans lequel le moteur d'un véhicule peut être démarré, ou les portières déverrouillées, à partir d'un téléphone mobile.

Ces méthodes présentent toutefois deux risques majeurs.

Le premier risque est qu'un usager non autorisé tel qu'un enfant tente de démarrer le véhicule alors que ce dernier se trouve dans un endroit confiné, ce qui pourrait s'avérer dangereux pour la santé de la personne qui entrera la première dans ce lieu confiné.

Un autre risque est qu'une personne malveillante tente de s'emparer du véhicule, en piratant la connexion à distance pour démarrer le véhicule.

### OBJET DE L'INVENTION

Afin de remédier aux risques précités de l'état de la technique, la présente invention propose une solution permettant de s'assurer que la personne qui souhaite démarrer à distance le véhicule est bien une personne adulte autorisée, si bien qu'elle est notamment consciente des risques inhérents au démarrage d'un véhicule en lieu confiné.

Cette solution consiste à utiliser un code confidentiel enregistré dans le calculateur embarqué du véhicule, que l'usager devra saisir à chaque fois afin d'être autorisé à démarrer son véhicule à distance.

Plus particulièrement, on propose selon l'invention un procédé de commande du véhicule automobile, sécurisée par le code confidentiel enregistré dans la mémoire d'un calculateur embarqué du véhicule automobile, permettant la mise à jour de ce code confidentiel dans la mémoire du calculateur embarqué, qui comprend des étapes de :
- saisie par l'usager sur le terminal mobile d'un nouveau code confidentiel,
- transmission par le terminal mobile vers le calculateur embarqué dudit nouveau code confidentiel,
- émission par le terminal mobile ou le calculateur embarqué d'une demande d'actionnement d'un moyen physique prédéterminé depuis l'habitacle dudit véhicule automobile,
- mémorisation et validation du nouveau code confidentiel par le calculateur embarqué si ledit moyen physique prédéterminé a été actionné dans un délai prédéterminé.

Ainsi, grâce à l'invention, dans le cas d'une vente du véhicule automobile, le nouveau propriétaire pourra sans difficulté saisir un nouveau code confidentiel, même s'il ne connaît pas le code confidentiel qui était utilisé jusqu'alors par l'ancien propriétaire. De même, si le propriétaire du véhicule a oublié le code confidentiel, il pourra en saisir un nouveau sans difficulté. C'est en effet l'actionnement du moyen physique qui permet au véhicule de savoir que la personne qui tente de changer le code confidentiel mémorisé est bien autorisée à effectuer cette opération, puisque cet actionnement signifie que cette personne est bien située dans l'habitacle du véhicule et qu'à ce titre, il s'agit bien d'une personne munie d'une clé valide.

Par ailleurs, grâce à la procédure d'enregistrement du nouveau code, il n'y a pas d'échange d'informations bidirectionnel à mettre en place entre le terminal mobile et le véhicule, puisque le code est simplement transmis une seule fois du terminal mobile au véhicule, ce qui évite d'ouvrir une faille dans la sécurité informatique du véhicule.

Enfin, puisque cette solution est uniquement logicielle, elle ne nécessite pas de capteurs supplémentaires et est facilement exploitable.

D'autres caractéristiques avantageuses et non limitatives du procédé de commande avec mise à jour conforme à l'invention sont les suivantes :
- le nouveau code confidentiel est l'unique code requis par le calculateur embarqué pour mettre à jour le code confidentiel (il n'est pas demandé à l'usager de saisir un ancien code confidentiel) ;
- le moyen physique prédéterminé est une clé ou une carte de démarrage du véhicule automobile ou un bouton accessible depuis l'habitacle du véhicule automobile ;
- le calculateur embarqué et/ou le terminal mobile étant adaptés à communiquer avec un serveur de messagerie, lequel mémorise les coordonnées d'un propriétaire du véhicule automobile, il est prévu une étape d'envoi audit serveur de messagerie d'une requête d'émission d'un message à destination du propriétaire du véhicule automobile dès qu'un nouveau code confidentiel est mémorisé et validé par le calculateur embarqué ;
- le calculateur embarqué et/ou le terminal mobile étant adaptés à communiquer avec un serveur de messagerie, lequel mémorise les coordonnées d'un propriétaire du véhicule automobile, il est prévu une étape d'envoi audit serveur de messagerie d'une requête d'émission d'un message à destination du propriétaire du véhicule automobile dès qu'un nouveau code confidentiel est émis par le terminal mobile.

Un example concerne avantageusement un procédé de commande dans lequel la commande est un démarrage à distance d'un véhicule automobile à l'aide d'un terminal mobile équipant un usager, comprenant :
- une opération préalable de mise à jour d'un code confidentiel enregistré dans la mémoire d'un calculateur embarqué du véhicule automobile au moyen d'un procédé tel que précité,
- une étape de saisie par l'usager sur le terminal mobile d'une requête de démarrage à distance du véhicule automobile,
- une étape de transmission de ladite requête depuis le terminal mobile vers ledit calculateur embarqué, et
- une étape de démarrage du véhicule automobile.

Préalablement au démarrage du véhicule automobile, il est prévu des étapes de :
- saisie par l'usager sur terminal mobile d'un code confidentiel,
- transmission depuis le terminal mobile vers le calculateur embarqué dudit code confidentiel ou d'un défi déterminé en fonction dudit code confidentiel, et
- vérification par le calculateur embarqué que ledit code confidentiel ou que ledit défi correspond au nouveau code confidentiel enregistré dans sa mémoire ou à un défi déterminé en fonction dudit nouveau code confidentiel.

Préférentiellement, si, à l'étape de vérification, le code confidentiel saisi (ou le défi déduit de celui-ci) ne correspond pas au code confidentiel enregistré dans la mémoire du calculateur embraqué (ou au défi déterminé en fonction de ce code confidentiel), les étapes de saisie, de transmission et de vérification sont répétées au moins une fois.

Avantageusement, après que les étapes de saisie, de transmission et de vérification ont été répétées au moins une fois, si ledit code confidentiel (ou ledit défi) ne correspond pas au code confidentiel enregistré dans la mémoire du calculateur embarqué (ou au défi déterminé en fonction de ce code confidentiel), le calculateur embarqué interdit tout démarrage à distance du véhicule automobile jusqu'à ce qu'un usager démarre le véhicule automobile depuis l'habitacle du véhicule automobile.

Selon une autre caractéristique avantageuse, la requête de démarrage à distance comporte une heure de programmation dudit démarrage à distance.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique d'un contexte dans lequel peut être mise en œuvre l'invention ; et
- la figure 2 est un diagramme illustrant les étapes permettant de mettre l'invention en œuvre.

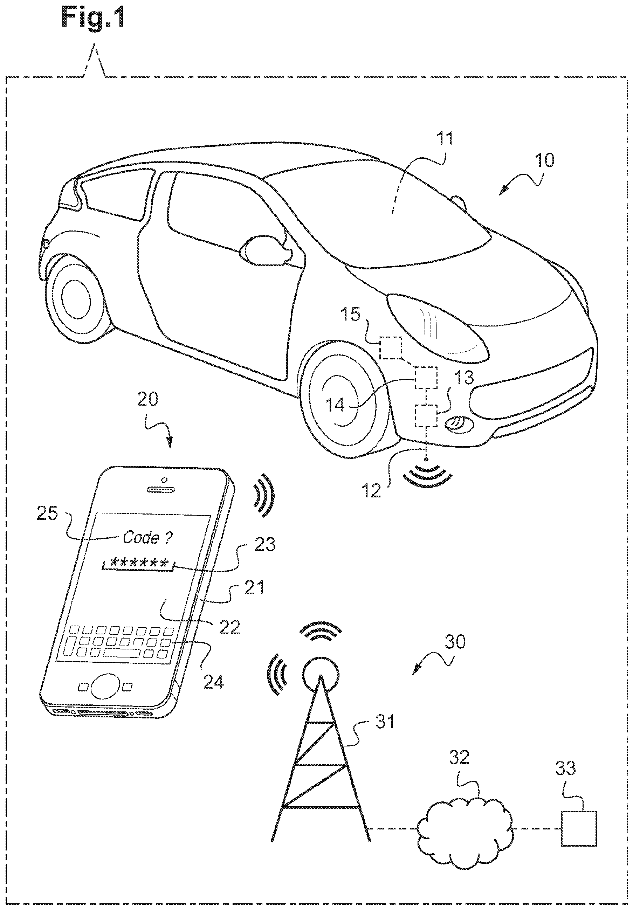

Sur la figure 1, on a représenté un véhicule automobile 10 et un terminal mobile 20.

Comme cela apparaît sur la figure 1, le véhicule automobile 10 est une voiture classique, comportant un châssis qui est supporté par des roues et qui délimite un habitacle 11. Il pourra s'agir de n'importe quel type de véhicule automobile, par exemple à propulsion électrique ou thermique ou hybride.

Tel qu'il est représenté sur la figure 1, le terminal mobile 20 est ici un téléphone portable intelligent (ou « smartphone »).

En variante, il pourrait s'agir d'un autre type de terminal mobile, par exemple d'une télécommande dédiée aux pilotages de différentes fonctions du véhicule automobile. Il pourrait aussi s'agir d'une montre connectée ou d'une tablette informatique.

Dans le contexte de la présente invention, le terminal mobile 20 est programmé pour pouvoir entrer en communication avec le véhicule automobile 10 afin d'échanger des données.

Il pourrait utiliser à cet effet une liaison directe à courte ou moyenne portée (par exemple de type Bluetooth ou WIFI).

Toutefois, ici, il utilisera une liaison sans fil à longue portée, qui exploitera un réseau de téléphonie mobile 30.

Pour cela, le véhicule automobile 10 et le terminal mobile 20 sont tous deux conçus pour se connecter au réseau de téléphonie mobile 30. Classiquement, ce dernier comprend des stations de base 31 adaptés à entrer en communication via des liaisons radio avec le terminal mobile 20 et le véhicule automobile 10, des passerelles de connexion à un réseau public 32, par exemple le réseau Internet, et des serveurs 33.

On considérera ici notamment un serveur 33 qui est géré par ou avec l'assentiment du constructeur du véhicule automobile 10.

On peut maintenant décrire plus en détail les composants du véhicule automobile 10 et du terminal mobile 20 qui sont utiles à la compréhension de l'invention.

Le véhicule automobile 10 comprend au moins un calculateur. Il en comporte ici trois.

Il comprend plus précisément ici un premier calculateur 13 gérant les communications du véhicule avec l'extérieur. Ce premier calculateur 13 est connecté à une antenne 12 adaptée à établir une communication avec le réseau Internet 32 via la station de base 31 la plus proche.

Le véhicule automobile 10 comprend aussi un second calculateur 14 qui est prévu pour commander le démarrage du véhicule automobile. Par démarrage du véhicule, on entend démarrage du moteur et/ou de la climatisation et/ou du chauffage et/ou du dégivrage. Ce second calculateur est connecté aux premier et troisième calculateurs 13, 15.

Le troisième calculateur 15 est quant à lui conçu pour piloter le moteur.

Chaque calculateur 13, 14, 15 comprend un processeur et une unité de mémorisation, par exemple une mémoire non-volatile réinscriptible ou un disque dur.

L'unité de mémorisation du premier calculateur 13 (ou en variante du second calculateur 14) mémorise notamment des données utilisées dans le cadre du procédé décrit ci-dessous, notamment un code confidentiel. Elle mémorise également une application informatique, constituée de programmes d'ordinateur comprenant des instructions dont l'exécution par le processeur permet la mise en oeuvre par le calculateur du procédé décrit ci-après.

Le terminal mobile 20 comprend quant à lui un processeur, une mémoire (par exemple une mémoire non-volatile réinscriptible), un module de communication sans fil, et un écran d'affichage 22 qui est ici tactile et qui est enchâssé dans un châssis 21.

Le module de communication sans fil permet d'établir une liaison sans fil avec le premier calculateur 13 du véhicule automobile 10, via le réseau de téléphonie mobile 30.

La mémoire permet au terminal mobile 20 de mémoriser une application utilisateur, destinée à faciliter la commande des fonctionnalités du véhicule automobile 10 au moyen de ce terminal mobile 20.

C'est donc dans ce cadre que l'invention peut être mise en œuvre.

L'invention propose en effet une solution pour permettre de commander à distance le démarrage du véhicule automobile, au moyen du terminal mobile 20, de manière sécurisée.

Pour assurer le niveau de sécurité souhaité, la mise en œuvre du démarrage à distance requiert la saisie sur le terminal mobile 20 d'un code confidentiel qui devra être authentifié par le véhicule automobile 10 avant le démarrage.

On comprend donc qu'il est au préalable nécessaire de mettre en mémoire dans l'unité de mémorisation du premier calculateur 13 (ou en variante du second calculateur 14) le code confidentiel.

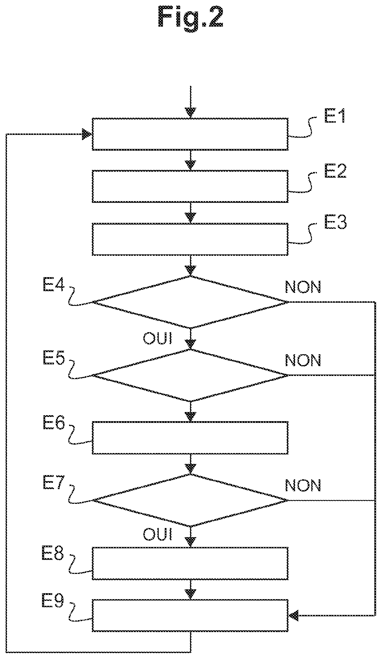

Ce procédé de mise en mémoire ou de mise à jour d'un code confidentiel dans l'unité de mémorisation du premier calculateur 13 se déroule en plusieurs étapes illustrées sur la figure 2.

La première étape E1 est une étape d'initialisation du procédé, au cours de laquelle l'usager démarre l'application utilisateur enregistrée dans son terminal mobile 20 et au cours de laquelle cette application utilisateur vérifie auprès du serveur 33 que le terminal mobile 20 est autorisé à démarrer le véhicule automobile 10 à distance et qu'une liaison peut être établie entre le serveur 33 et le premier calculateur 13 du véhicule automobile 10.

Une fois ces opérations effectuées et validées, au cours d'une étape E2, l'application utilisateur commande l'affichage sur l'écran tactile 22 de plusieurs informations, à savoir :
- un message 25 demandant à l'usager de saisir un nouveau code confidentiel,
- un espace dans lequel ce nouveau code confidentiel 23 s'affiche, et
- un espace 24 de saisie du code, qui se présente ici sous la forme d'un clavier tactile (voir figure 1).

Lorsque le nouveau code confidentiel 23 a été saisi par l'usager, il est transmis au cours d'une étape E3 au premier calculateur 13, via le serveur 33. On notera ici que, pour des raisons de sécurité, le serveur 33 ne stocke pas ce nouveau code confidentiel 23 dans sa base de données.

Lorsqu'il reçoit ce nouveau code confidentiel 23, le premier calculateur 13 réalise une série de vérifications pour contrôler que le véhicule est en état de mémoriser le nouveau code confidentiel et que l'usager est bien authentifié. C'est ici a minima la position de l'usager (à l'intérieur du véhicule) qui va être utilisée pour confirmer que l'usager est bien autorisé à mettre à jour le code confidentiel.

Plus précisément, au cours d'une étape E4, le premier calculateur 13 vérifie que le moteur est à l'arrêt.

Si tel n'est pas le cas, le processus s'interrompt et un message expliquant à l'usager la raison de cette interruption est affiché sur l'écran de son terminal mobile 20.

Dans le cas contraire, c'est-à-dire si le moteur est bien à l'arrêt, le processus se poursuit en une étape E5 (qui peut éventuellement être facultative).

Au cours de cette étape E5, le premier calculateur 13 vérifie que la clé de contact ou la carte électronique de démarrage du véhicule est bien insérée dans le Neiman ou dans la fente conçu à cet effet. Dans le cas où le véhicule est dépourvu de Neiman ou de fente, le premier calculateur 13 vérifie que la carte électronique est bien située à proximité du véhicule.

Si tel n'est pas le cas, le processus s'interrompt et un message expliquant à l'usager la raison de cette interruption est affiché sur l'écran de son terminal mobile 20.

Dans le cas contraire, le processus se poursuit en une étape E6.

Au cours de cette étape E6, le terminal mobile 20 ou le premier calculateur 13 émet une demande d'actionnement d'un moyen physique prédéterminé depuis l'habitacle 11 du véhicule automobile 10.

Pour cela, l'application utilisateur peut commander l'affichage sur l'écran tactile 22 du terminal mobile 20 d'un message invitant l'usager à tourner dans un sens puis dans l'autre la clé de contact dans le Neiman, un nombre prédéterminé de fois.

Cette étape permet donc de contrôler que la personne qui utilise le terminal mobile 20 est bien celle qui est située dans l'habitacle et que cette personne dispose bien de la clé de contact (ce qui l'authentifie comme personne autorisée à modifier le code confidentiel).

En variante, cette étape E6 pourrait être mise en œuvre différemment. Ainsi, à titre d'exemple, on pourrait prévoir que le premier calculateur 13 commande les enceintes du véhicule de manière que ces derniers émettent un message préenregistré demandant à l'usager d'appuyer sur un bouton particulier du véhicule, durant une durée déterminée. Ce bouton pourrait être un bouton physique (par exemple celui conçu pour commander localement le démarrage du moteur) ou un bouton virtuel affiché sur un écran tactile situé dans l'habitacle du véhicule.

A l'étape E7, le premier calculateur 13 attend que l'usager effectue l'opération demandée pendant un délai prédéterminé, de quelques secondes.

A l'issue de cette étape, si l'usager n'a pas effectué l'opération demandée, le processus s'interrompt et un message expliquant à l'usager la raison de cette interruption est affiché sur l'écran de son terminal mobile 20.

Dans le cas contraire, au cours d'une étape E8, le premier calculateur 13 valide le nouveau code confidentiel 23 et le mémorise dans son unité de mémorisation, en lieu et place de celui qui était précédemment mémorisé.

En résumé, on comprend que le nouveau code confidentiel est validé à l'unique condition que l'usager actionne bien la clé ou le bouton de la manière demandée. Il n'est notamment pas demandé à l'usager de saisir l'ancien code confidentiel qui était enregistré, ce qui simplifie la mise à jour du code dans de nombreuses situations, notamment à la suite de la vente du véhicule automobile 10 ou lorsque l'usager a oublié le code confidentiel.

Il est enfin prévu une dernière étape E9, qui consiste à envoyer un message au propriétaire du véhicule dès lors qu'une personne a tenté (avec succès ou non) de mettre à jour le code confidentiel.

Pour cela, le serveur 33 mémorise les coordonnées du propriétaire du véhicule automobile 10 (adresse physique et/ou adresse mail et/ou numéro de téléphone, ..).

On peut alors prévoir que, dès qu'un nouveau code confidentiel transite via le serveur 33 depuis le terminal mobile 20 vers le véhicule automobile 10 (à l'étape E3), le serveur 33 émette un message à destination du propriétaire du véhicule automobile 10 pour l'avertir qu'une personne tente de modifier le code confidentiel.

On peut maintenant décrire la manière selon laquelle l'usager pourra alors démarrer à distance le véhicule automobile 10 s'il a connaissance du nouveau code confidentiel.

La première étape est une étape d'initialisation du procédé, au cours de laquelle l'usager démarre l'application utilisateur enregistrée dans son terminal mobile 20 et au cours de laquelle cette application utilisateur vérifie auprès du serveur 33 qu'une liaison peut être établie entre le serveur 33 et le premier calculateur 13 du véhicule automobile 10.

Lorsque c'est le cas, l'application utilisateur commande l'affichage sur l'écran tactile 21 du terminal mobile 20 d'un message invitant l'usager à saisir le code confidentiel.

On notera ici que ce code confidentiel sera distinct du code de déverrouillage du terminal mobile 20 et qu'il sera propre à l'exécution d'une commande à distance du véhicule au moyen du terminal mobile, par exemple au démarrage à distance du véhicule automobile. D'autres commandes à distances sont envisageables telles que par exemple, à titre purement illustratif et non exhaustif, la mise en route du chauffage ou de la climatisation, l'allumage ou l'extinction des feux.

Une fois ce code confidentiel saisi, le terminal mobile 20 émet une requête de démarrage à distance du véhicule automobile 10, laquelle comprend le code confidentiel.

Lorsqu'il reçoit cette requête, le premier calculateur repéré 13, vérifie que le code confidentiel reçu correspond au code confidentiel qui est enregistré dans son unité de mémorisation.

Si tel est le cas, le moteur du véhicule est démarré automatiquement, sans l'utilisation de la clé de contact ou de la carte électronique de démarrage.

Dans le cas contraire, un signal d'erreur est renvoyé au terminal mobile 20 de manière que l'application utilisateur commande l'affichage sur l'écran tactile 22 d'un message d'erreur et d'une demande de nouvelle saisie du code confidentiel.

Préférentiellement, après un nombre déterminé d'erreurs (par exemple 3), le processus s'interrompt et le terminal mobile 20 affiche à l'usager un message lui indiquant que la fonction de démarrage à distance du véhicule restera bloquée tant que le moteur n'aura pas été démarré classiquement, in situ, c'est-à-dire en utilisant la clé de contact ou la carte électronique de démarrage du véhicule depuis l'intérieur de l'habitacle 11 de ce véhicule.

De son côté, le premier calculateur 13 suspend alors la fonction de démarrage à distance tant qu'il n'aura pas reçu du second calculateur 14 un signal indiquant que le moteur a été démarré depuis l'intérieur de l'habitacle 11 de ce véhicule.

La présente invention n'est nullement limitée au mode de réalisation décrit et représenté, mais l'homme du métier saura y apporter toute variante conforme à l'invention.

En particulier, on pourrait prévoir que lorsque le terminal mobile transmet au véhicule automobile 10 une requête de démarrage à distance, cette requête comporte non pas le code confidentiel, mais plutôt un défi, c'est-à-dire le résultat d'un calcul effectué par le terminal mobile 20 en fonction du code confidentiel saisi par l'usager.

Alors, à réception de ce défi, le véhicule pourra lui également réaliser le calcul en fonction du code confidentiel stocké dans son unité de mémorisation, puis vérifier que les défis correspondent.

Selon une autre variante de l'invention, on pourrait prévoir que lorsque le terminal mobile transmet au véhicule automobile 10 une requête de démarrage à distance, cette requête comporte une heure de programmation dudit démarrage à distance.

De cette manière, l'usager pourra programmer le démarrage du véhicule à une heure choisie, par exemple 5 minutes avant l'heure habituelle à laquelle il part travailler.

## Revendications

1. Procédé de commande d'un véhicule automobile (10) sécurisée par un code confidentiel enregistré dans la mémoire d'un calculateur embarqué (13) du véhicule automobile (10), permettant la mise à jour du code confidentiel, à l'aide d'un terminal mobile (20) équipant un usager installé dans l'habitacle (11) dudit véhicule automobile (10), comportant des étapes de :
- saisie par l'usager sur le terminal mobile (20) d'un nouveau code confidentiel (23),
- transmission par le terminal mobile (20) vers le calculateur embarqué (13) dudit nouveau code confidentiel (23), le procédé **caractérisé en ce qu'**il comporte en outre les étapes:
- émission par le terminal mobile (20) ou le calculateur embarqué (13) d'une demande d'actionnement par l'usager d'un moyen physique prédéterminé depuis l'habitacle (11) dudit véhicule automobile (10), et
- mémorisation et validation du nouveau code confidentiel (23) par le calculateur embarqué (13) si ledit moyen physique prédéterminé a été actionné dans un délai prédéterminé.

2. Procédé de commande selon la revendication précédente, dans lequel le nouveau code confidentiel (23) est l'unique code confidentiel requis par le calculateur embarqué (13) pour mettre à jour le code confidentiel.

3. Procédé de commande selon l'une des revendications précédentes, dans lequel le moyen physique prédéterminé est une clé ou une carte de démarrage du véhicule automobile (10) ou un bouton accessible depuis l'habitacle (11) du véhicule automobile (10).

4. Procédé de commande selon l'une des revendications précédentes, dans lequel, le calculateur embarqué (13) et/ou le terminal mobile (20) étant adaptés à communiquer avec un serveur de messagerie (33), lequel mémorise les coordonnées d'un propriétaire du véhicule automobile (10), il est prévu une étape d'envoi audit serveur de messagerie (33) d'une requête d'émission d'un message à destination du propriétaire du véhicule automobile (10) dès qu'un nouveau code confidentiel (23) est mémorisé et validé par le calculateur embarqué (13).

5. Procédé de commande selon l'une des revendications précédentes, dans lequel, le calculateur embarqué (13) et/ou le terminal mobile (20) étant adaptés à communiquer avec un serveur de messagerie (33), lequel mémorise les coordonnées d'un propriétaire du véhicule automobile (10), il est prévu une étape d'envoi audit serveur de messagerie (33) d'une requête d'émission d'un message à destination du propriétaire du véhicule automobile (10) dès qu'un nouveau code confidentiel (23) est émis par le terminal mobile (20).

6. Procédé de commande selon l'une quelconque des revendications précédentes, dans lequel ladite commande est un démarrage à distance du véhicule automobile (10) à l'aide du terminal mobile (20) équipant l'usager, comprenant, des étapes de :
- saisie par l'usager sur le terminal mobile (20) d'une requête de démarrage à distance du véhicule automobile (10),
- transmission de ladite requête depuis le terminal mobile (20) vers ledit calculateur embarqué (13), et
- démarrage du véhicule automobile (10),
oú préalablement au démarrage du véhicule automobile (10), il est prévu des étapes de :
- saisie par l'usager sur terminal mobile (20) du code confidentiel (23),
- transmission depuis le terminal mobile (20) vers le calculateur embarqué (13) dudit code confidentiel (23) ou d'un défi déterminé en fonction dudit code confidentiel (23), et
- vérification par le calculateur embarqué (13) que ledit code confidentiel (23) ou que ledit défi correspond au nouveau code confidentiel (23) enregistré dans sa mémoire ou à un défi déterminé en fonction dudit nouveau code confidentiel (23).

7. Procédé de commande selon la revendication précédente, dans lequel si, à l'étape de vérification, ledit code confidentiel (23) ou ledit défi ne correspond pas au nouveau code confidentiel (23) enregistré dans la mémoire du calculateur embarqué (13) ou au défi déterminé en fonction de ce nouveau code confidentiel (23), les étapes de saisie, de transmission et de vérification sont répétées au moins une fois.

8. Procédé de commande selon la revendication précédente, dans lequel, après que les étapes de saisie, de transmission et de vérification ont été répétées au moins une fois, si ledit code confidentiel (23) ou ledit défi ne correspond pas au nouveau code confidentiel (23) enregistré dans la mémoire du calculateur embarqué (13) ou au défi déterminé en fonction de ce nouveau code confidentiel (23), le calculateur embarqué (13) interdit tout démarrage à distance du véhicule automobile (10) jusqu'à ce qu'un usager démarre le véhicule automobile (10) depuis l'habitacle (11) du véhicule automobile (10).

9. Procédé de commande selon l'une des trois revendications précédentes, dans lequel la requête de démarrage à distance comporte une heure de programmation dudit démarrage à distance.

## Patentansprüche

1. Verfahren zur Steuerung eines Kraftfahrzeugs (10), die durch einen im Speicher eines Bordcomputers (13) des Kraftfahrzeugs (10) gespeicherten vertraulichen Code gesichert ist, welches die Aktualisierung des vertraulichen Codes mithilfe eines mobilen Endgerätes (20) ermöglicht, mit dem ein im Innenraum (11) des Kraftfahrzeugs (10) befindlicher Benutzer ausgestattet ist, die Schritte umfassend:
- Eingabe eines neuen vertraulichen Codes (23) durch den Benutzer an dem mobilen Endgerät (20),
- Übertragung des neuen vertraulichen Codes (23) durch das mobile Endgerät (20) an den Bordcomputer (13),
wobei das Verfahren **dadurch gekennzeichnet ist, dass** es außerdem die Schritte umfasst:
- Senden, durch das mobile Endgerät (20) oder den Bordcomputer (13), einer Anforderung zur Betätigung eines vorbestimmten physischen Mittels durch den Benutzer vom Innenraum (11) des Kraftfahrzeugs (10) aus, und
- Speicherung und Validierung des neuen vertraulichen Codes (23) durch den Bordcomputer (13), falls das vorbestimmte physische Mittel innerhalb einer vorbestimmten Zeit betätigt worden ist.

2. Verfahren zur Steuerung nach dem vorhergehenden Anspruch, wobei der neue vertrauliche Code (23) der einzige vertrauliche Code ist, der von dem Bordcomputer (13) benötigt wird, um den vertraulichen Code zu aktualisieren.

3. Verfahren zur Steuerung nach einem der vorhergehenden Ansprüche, wobei das vorbestimmte physische Mittel ein Zündschlüssel oder eine Schlüsselkarte des Kraftfahrzeugs (10) oder eine vom Innenraum (11) des Kraftfahrzeugs (10) aus zugängliche Taste ist.

4. Verfahren zur Steuerung nach einem der vorhergehenden Ansprüche, wobei, wenn der Bordcomputer (13) und/oder das mobile Endgerät (20) dafür ausgelegt sind, mit einem Mailserver (33) zu kommunizieren, welcher die Daten eines Eigentümers des Kraftfahrzeugs (10) speichert, ein Schritt des Sendens, an den Mailserver (33), einer Sendeanforderung für eine Nachricht an den Eigentümer des Kraftfahrzeugs (10) vorgesehen ist, nachdem ein neuer vertraulicher Code (23) durch den Bordcomputer (13) gespeichert und validiert worden ist.

5. Verfahren zur Steuerung nach einem der vorhergehenden Ansprüche, wobei, wenn der Bordcomputer (13) und/oder das mobile Endgerät (20) dafür ausgelegt sind, mit einem Mailserver (33) zu kommunizieren, welcher die Daten eines Eigentümers des Kraftfahrzeugs (10) speichert, ein Schritt des Sendens, an den Mailserver (33), einer Sendeanforderung für eine Nachricht an den Eigentümer des Kraftfahrzeugs (10) vorgesehen ist, nachdem ein neuer vertraulicher Code (23) durch das mobile Endgerät (20) gesendet worden ist.

6. Verfahren zur Steuerung nach einem der vorhergehenden Ansprüche, wobei die Steuerung ein Fernstarten des Kraftfahrzeugs (10) mithilfe des mobilen Endgerätes (20) ist, mit dem der Benutzer ausgestattet ist, die Schritte umfassend:
- Eingabe, durch den Benutzer an dem mobilen Endgerät (20), einer Anforderung zum Fernstarten des Kraftfahrzeugs (10),
- Übertragung der Anforderung von dem mobilen Endgerät (20) an den Bordcomputer (13), und
- Starten des Kraftfahrzeugs (10),
wobei vor dem Starten des Kraftfahrzeugs (10) die Schritte vorgesehen sind:
- Eingabe des vertraulichen Codes (23) durch den Benutzer an dem mobilen Endgerät (20),
- Übertragung des vertraulichen Codes (23) oder einer in Abhängigkeit von dem vertraulichen Code (23) bestimmten Challenge von dem mobilen Endgerät (20) an den Bordcomputer (13), und
- Überprüfung, durch den Bordcomputer (13), ob der vertrauliche Code (23) oder ob die Challenge dem in seinem Speicher gespeicherten neuen vertraulichen Code (23) oder einer in Abhängigkeit von dem neuen vertraulichen Code (23) bestimmten Challenge entspricht.

7. Verfahren zur Steuerung nach dem vorhergehenden Anspruch, wobei, falls im Schritt der Überprüfung der vertrauliche Code (23) oder die Challenge nicht dem im Speicher des Bordcomputers (13) gespeicherten neuen vertrauliche Code (23) oder der in Abhängigkeit von diesem neuen vertraulichen Code (23) bestimmten Challenge entspricht, die Schritte der Eingabe, der Übertragung und der Überprüfung mindestens einmal wiederholt werden.

8. Verfahren zur Steuerung nach dem vorhergehenden Anspruch, wobei, nachdem die Schritte der Eingabe, der Übertragung und der Überprüfung mindestens einmal wiederholt worden sind, falls der vertrauliche Code (23) oder die Challenge nicht dem im Speicher des Bordcomputers (13) gespeicherten neuen vertrauliche Code (23) oder der in Abhängigkeit von diesem neuen vertraulichen Code (23) bestimmten Challenge entspricht, der Bordcomputer (13) jedes Fernstarten des Kraftfahrzeugs (10) unterbindet, bis ein Benutzer das Kraftfahrzeug (10) vom Innenraum (11) des Kraftfahrzeugs (10) aus startet.

9. Verfahren zur Steuerung nach einem der drei vorhergehenden Ansprüche, wobei die Anforderung zum Fernstarten eine Programmierungszeit des Fernstartens umfasst.

## Claims

1. Method for controlling a motor vehicle (10), the control being secured by a confidential code stored in the memory of an onboard computer (13) of the motor vehicle (10), allowing the updating of the confidential code, with the aid of a mobile terminal (20) with which a user positioned in the passenger compartment (11) of said motor vehicle (10) is equipped, including steps of:
- the user entering a new confidential code (23) on the mobile terminal (20),
- the mobile terminal (20) transmitting said new confidential code (23) to the onboard computer (13), the method **characterized in that** it furthermore includes the steps:
- the mobile terminal (20) or the onboard computer (13) transmitting a request for the user to actuate a predefined physical means from the passenger compartment (11) of said motor vehicle (10), and
- the onboard computer (13) storing and validating the new confidential code (23) if said predefined physical means has been actuated in a predefined period.

2. Control method according to the preceding claim, wherein the new confidential code (23) is the only confidential code required by the onboard computer (13) to update the confidential code.

3. Control method according to either of the preceding claims, wherein the predefined physical means is an ignition card or key of the motor vehicle (10) or a button accessible from the passenger compartment (11) of the motor vehicle.

4. Control method according to one of the preceding claims, wherein, the onboard computer (13) and/or the mobile terminal (20) being able to communicate with a messaging server (33), which stores the details of an owner of the motor vehicle (10), there is provided a step of sending said messaging server (33) a request to transmit a message to the owner of the motor vehicle (10) as soon as a new confidential code (23) is stored and validated by the onboard computer (13).

5. Control method according to one of the preceding claims, wherein, the onboard computer (13) and/or the mobile terminal (20) being able to communicate with a messaging server (33), which stores the details of an owner of the motor vehicle (10), there is provided a step of sending said messaging server (33) a request to transmit a message to the owner of the motor vehicle (10) as soon as a new confidential code (23) is transmitted by the mobile terminal (20).

6. Control method according to any one of the preceding claims, wherein said control is a remote starting of the motor vehicle (10) with the aid of the mobile terminal (20) with which the user is equipped, comprising steps of:
- the user entering a request to remotely start the motor vehicle (10) on the mobile terminal (20),
- transmitting said request from the mobile terminal (20) to said onboard computer (13), and
- starting the motor vehicle (10),
where, prior to starting the motor vehicle (10), there are provided steps of:
- the user entering the confidential code (23) on the mobile terminal (20),
- transmitting, from the mobile terminal (20) to the onboard computer (13), said confidential code (23) or a challenge defined in accordance with said confidential code (23), and
- the onboard computer (13) checking that said confidential code (23) or that said challenge corresponds to the new confidential code (23) stored in its memory or to a challenge defined in accordance with said new confidential code (23).

7. Control method according to the preceding claim, wherein if, at the checking step, said confidential code (23) or said challenge does not correspond to the new confidential code (23) stored in the memory of the onboard computer (13) or to the challenge defined in accordance with this new confidential code (23), the entering, transmitting and checking steps are repeated at least once.

8. Control method according to the preceding claim, wherein, after the entering, transmitting and checking steps have been repeated at least once, if said confidential code (23) or said challenge does not correspond to the new confidential code (23) stored in the memory of the onboard computer (13) or to the challenge defined in accordance with this new confidential code (23), the onboard computer (13) forbids any remote starting of the motor vehicle (10) until a user starts the motor vehicle (10) from the passenger compartment (11) of the motor vehicle (10).

9. Control method according to one of the three preceding claims, wherein the remote starting request includes a time for programming said remote starting.
